Europäisches Patentamt

European Patent Office

Office européen des brevets

(11) Numéro de publication: **0 026 118**
**A1**

## (12) DEMANDE DE BREVET EUROPEEN

(21) Numéro de dépôt: 80401176.5

(22) Date de dépôt: 11.08.80

(51) Int. Cl.³: **C 21 C 5/52**
**F 27 D 17/00**

(30) Priorité: 30.08.79 FR 7921972

(43) Date de publication de la demande:
01.04.81 Bulletin 81/13

(84) Etats Contractants Désignés:
AT CH DE FR GB IT LI SE

(71) Demandeur: INSTITUT DE RECHERCHES DE
SIDERURGIE FRANCAISE (IRSID) France
185, rue Président Roosevelt
F-78105 Saint Germain-en-Laye(FR)

(71) Demandeur: CLESID S.A.
51 rue Sibert
F-42403 Saint-Chamond(FR)

(72) Inventeur: Cordier, Jacques
2, rue Principale
F-57640 Sanry-les-Vigy(FR)

(72) Inventeur: Michelet, Jacques
19, rue du Fort
Longeville-les-Metz F-57000 Metz(FR)

(72) Inventeur: Davene, Jean
26, rue Bel Air
F-42390 Villars(FR)

(74) Mandataire: Tuppin, Claude et al,
INSTITUT DE RECHERCHES DE LA SIDERURGIE
FRANCAISE (IRSID) 185, rue Président Roosevelt
F-78105 Saint-Germain-en-Laye(FR)

(54) Procédé et dispositif de captage des gaz au four à arc.

(57) L'invention consiste à capter les gaz produits dans un four à arc (1) équipé d'un dispositif de captage (13) comprenant un étage d'émission des gaz hors du four muni d'un organe (18) de réglage des pertes de charge et un étage d'évacuation des gaz émis, muni d'une ouverture (22) de prise d'air extérieur et comportant des moyens d'aspiration (15).

L'invention se caractérise en ce qu'un premier régulateur (19, 20, 20', 30) permet de maintenir le four en surpression en réglant le débit d'émission grâce à l'organe, un second régulateur (23, 24, 31) règle le débit d'air aspiré par l'ouverture (22), de manière à maintenir le mélange gazair dans l'étage d'évacuation dans un état physico-chimique recherché.

L'invention assure un captage des gaz en contrôlant toutes les entrées d'air dans le système, four compris, et permet ainsi de limiter au maximum les risques d'explosion et de pouvoir traiter au dépoussiérage (12) un gaz brûlé et refroidi se présentant sous un débit variable aussi proche que possible de celui émis par le four.

./...

PROCEDE ET DISPOSITIF DE CAPTAGE DES GAZ AU FOUR A ARC

La présente invention se rapporte au captage des gaz de réaction produits par un four à arc, en particulier par un four à arc sidérurgique.

Dans le cadre général de la lutte contre la pollution atmosphérique due aux usines sidérurgiques, le dépoussiérage des gaz produits par le four à arc constitue un sujet d'actualité dans le monde entier. Parmi les différents problèmes posés, celui du captage des gaz, avant le traitement de dépoussiérage proprement dit, n'est pas l'un des moindres. Son importance est particulièrement ressentie dans le cas des fours modernes à haute productivité où les débits de gaz de réaction émis peuvent atteindre des valeurs très élevées, par exemple de l'ordre de 80 000 m$^3$/h (17 000 Nm$^3$/h) et même davantage, pour un four d'une capacité de 80 t.

Les systèmes de captage les plus récents, qui opèrent au niveau du four lui-même, sont constitués essentiellement de deux parties fonctionnelles distinctes dans le prolongement immédiat l'une de l'autre : un étage d'émission faisant partie du four lui-même et permettant la sortie des gaz hors de celui-ci, suivi d'un étage d'évacuation assurant, par des moyens de tirage, tels qu'un ventilateur, la collecte des gaz émis et leur canalisation vers l'installation de dépoussiérage.

Les gaz doivent être refroidis avant leur dépoussiérage qui s'opère généralement au travers de manches filtrantes. Par ailleurs, ces gaz étant chargés d'oxyde de carbone et d'hydrogène, il peut être dangereux de les refroidir avant de les brûler, en raison des entrées d'air pratiquement inévitables dans le système et qui, au contact des gaz froids, peuvent provoquer des explosions.

Compte tenu de ces impératifs, l'étage d'évacuation présente, en amont du dépoussiérage, une ouverture de mise en communication avec l'extérieur par laquelle pénètre un débit d'air assurant à la fois la combustion des gaz et leur refroidissement par effet de dilution.

En règle générale, la méthode de captage consiste essentiellement à régler le tirage dans l'étage d'évacuation à un niveau supérieur à celui correspondant à l'émission de gaz de façon à mettre l'atmosphère intérieure du four en dépression et réduire ainsi au maximum les fuites de gaz par les différents orifices présents sur le four, tels que les orifices de passage des électrodes, ou la porte de décrassage, pour ne citer que les plus importants.

Cette pratique présente néanmoins certains inconvénients majeurs qui peuvent s'énoncer de la manière suivante : en premier lieu, la mise en dépression du four conduit inévitablement à une aspiration d'air à l'intérieur de celui-ci par les orifices présents sur le four. Cette entrée d'air parasite, difficilement contrôlable, est en règle générale néfaste au bon déroulement du processus d'élaboration du métal liquide dans le four. Par ailleurs, elle provoque déjà dans le four une combustion des gaz qui se poursuit à la sortie de celui-ci. On peut regretter que le pouvoir calorifique de ces gaz, riches en oxyde de carbone, soit ainsi gaspillé.

D'autre part, les entrées d'air au niveau de l'étage d'évacuation conduisent à des débits aspirés très élevés, souvent en large excès par rapport aux besoins de refroidissement des gaz, et imposent un surdimensionnement de l'installation de dépoussiérage qui n'est pas justifiée par ailleurs. A titre indicatif, un débit de gaz émis de l'ordre de 80 000 m$^3$/h réels à la température de 1 100°C à la sortie du four, se transforme, après dilution par apport massif tel que pratiqué habituellement, en un débit de plus de 600 000 m$^3$/h à 130°C, ce qui est considérable.

On connaît des méthodes de captage (brevet français 1.433.994 et brevet anglais 1.152.886), selon lesquelles on règle le débit de gaz émis par le four de manière à maintenir celui-ci en surpression permanente, qu'elle que soient les allures de marche (fusion, affinage, réduction, etc...) et éviter ainsi des entrées d'air dans le four.

Toutefois, le tirage dans l'étage d'évacuation étant maintenu constant, on comprend que, dans ces conditions, le débit d'air de combustion-dilution s'ajuste inévitablement en fonction inverse de débit de gaz émis hors du four, de sorte que, en contrepartie de l'obtention d'un contrôle de la pression dans le four, on n'est plus maître des entrées d'air dans le dispositif de captage. Comme la marche du four est irrégulière, la méthode conduit immanquablement aux inconvénients déjà évoqués, soit en raison d'un apport massif d'air qui dilue trop les gaz en période de basse production gazeuse, soit, en période de pointe, en raison d'un apport d'air trop faible qui ne par vient plus à assurer un refroidissement suffisant avant le dépoussiérage ou à assurer la disparition complète du CO et de l'H$_2$ par combustion.

La présente invention a pour but une nouvelle méthode de captage des gaz qui remédie aux inconvénients précités en évitant à la fois les entrées d'air dans le four, par un maintien de celui-ci en surpression, et les entrées d'air incontrôlées dans l'installation de captage.

Un autre but de l'invention est de limiter au maximum les risques d'explosion.

Un autre but de l'invention est de pouvoir traiter au dépoussiérage un gaz brûlé et refroidi se présentant sous un débit variable aussi proche que possible de celui émis par le four.

Avec tous ces objectifs en vue, l'invention a pour objet un procédé de captage des gaz de réaction produits par un four à arc équipé d'un dispositif de captage au niveau du four et comprenant, dans le prolongement immédiat l'un de l'autre, un étage d'émission des gaz hors du four et un étage d'évacuation des gaz émis muni d'une ouverture de communication avec l'air extérieur et assurant, par des moyens de tirage, la collecte des gaz émis et leur transport vers une installation d'épuration, procédé selon lequel on mesure la pression relative de l'atmosphère du four et on maintient en permanence ladite atmosphère en surpression par un réglage du débit des gaz dans l'étage d'émission, et caractérisé en ce qu'on règle le débit des gaz évacués en effectuant simultanément deux opérations indépendamment l'une de l'autre :

- dans une première opération, on agit sur la section de passage des gaz dans l'étage d'émission afin de maintenir en permanence l'atmosphère du four en surpression,

- dans une seconde opération, on agit sur les moyens de tirage de l'étage d'évacuation et/ou sur la section de passage de l'ouverture de mise en communication avec l'air extérieur, afin de régler le débit d'air aspiré dans ledit étage, à une valeur déterminée choisie en fonction du débit de gaz émis par le four.

Conformément à une caractéristique du procédé, on détermine la valeur de réglage du débit d'air aspiré dans l'étage d'évacuation en mesurant un paramètre représentatif de l'état physico-chimique du mélange air-gaz (température et/ou la concentration en oxygène, par exemple), on compare la valeur obtenue à une valeur dudit paramètre représentative d'un état physico-chimique voulu du mélange air-gaz, et on agit sur les moyens de tirage ou sur la section de passage de l'ouverture de façon à annuler l'écart entre les valeurs voulue et mesurée.

Conformément à une mise en oeuvre préférée, le paramètre mesuré étant la concentration en oxygène du mélange air-gaz, on choisit pour cette concentration une valeur égale ou légèrement supérieure à celle correspondant à une combustion des gaz dans des conditions stoechiométriques, on refroidit ensuite le mélange air-gaz par tout moyen approprié jusqu'à un niveau de température acceptable pour un traitement de dépoussiérage.

L'invention a également pour objet une installation de captage des gaz pour la mise en oeuvre du procédé, comprenant dans le prolongement immédiat l'un de l'autre, un étage d'émission des gaz hors du four, muni d'un organe de réglage de perte de charge, et un étage d'évacuation des gaz émis équipé de moyens de tirage et présentant une ouverture de communication avec l'air extérieur, installation caractérisée en ce qu'elle comprend : deux régulations de captage des gaz, indépendantes l'une de l'autre :

- une régulation affectée à l'étage d'émission et munie de moyens de mesure de la pression relative de l'atmosphère du four et de moyens pour agir sur l'organe de réglage de perte de charge disposé dans l'étage d'émission des gaz hors du four,

- une régulation affectée à l'étage d'évacuation et munie de moyens de mesure de la valeur d'un paramètre représentatif de l'état physico-chimique du mélange air-gaz dans l'étage d'aspiration, tel que la température et/ou la concentration en oxygène, de moyens pour fournir une valeur de consigne dudit paramètre représentative d'un état physico-chimique voulu du mélange air-gaz, et des moyens pour agir sur les moyens de tirage de l'étage d'évacuation ou pour agir sur un organe de perte de charge prévu au niveau de ladite ouverture de mise en communication avec l'air extérieur.

Conformément à une variante, l'étage d'évacuation est relié de façon étanche, au moins temporairement, à l'étage d'émission, ladite ouverture de communication avec l'air extérieur est située en aval du collecteur dans le sens de l'aspiration, et les moyens pour mesurer la valeur du paramètre représentatif de l'état du mélange air-gaz sont placés en aval de ladite ouverture dans le sens de l'aspiration.

Conformément à une autre variante, l'étage d'évacuation comporte un collecteur coiffant à distance l'extrémité de l'étage d'émission, sans joint d'étanchéité entre eux, de façon à ménager à cet endroit l'ouverture de mise en communication avec l'air extérieur, et les moyens pour mesurer la valeur du paramètre représentatif de l'état du mélange air-gaz sont placés en aval du collecteur dans le sens de l'aspiration.

Selon une caractéristique préférée de l'invention, l'étage d'évacuation comporte une chambre de combustion des gaz émis par le four, ladite chambre étant munie de l'ouverture de mise en communication de l'étage d'évacuation avec l'air ambiant.

Selon une autre caractéristique avantageuse, l'étage d'évacuation comporte des moyens de refroidissement du mélange air-gaz par échange de chaleur avec le milieu extérieur.

Comme on l'aura sans doute déjà compris, l'invention consiste pour l'essentiel à conférer à l'installation de captage deux fonctions distinctes et successives, indépendantes mais complémentaires :

- une première fonction qui est d'assurer le contrôle de la quantité de gaz émise à tout instant par le four de manière à maintenir celui-ci en surpression,

- une seconde fonction qui est d'assurer le contrôle à tout instant de la quantité d'air que l'on laisse volontairement pénétrer dans le système avec les gaz émis hors du four de manière à pouvoir maîtriser en permanence la proportion d'air qui vient se mélanger avec les gaz et ajuster ainsi la carburation de ces derniers à des niveaux voulus.

On peut ainsi supprimer les entrées d'air et opérer par conséquent un captage sans combustion des gaz. On peut également ajuster les entrées d'air à une quantité minimale suffisante pour permettre la combustion complète des gaz (stoechiométrie), et éviter ainsi tout risque d'explosion. On peut encore ajuster les entrées d'air à une quantité optimale pour assurer la combustion des gaz et leur refroidissement, par dilution, juste nécessaire pour ramener leur température à un niveau compatible avec leur traitement dans une unité de dépoussiérage ultérieur. Bien entendu, ces points de fonctionnement ne sont pas limitatifs et on est libre d'effectuer tous les réglages intermédiaires de débit d'air aspiré que l'on souhaite. L'invention permet en outre de contrôler les entrées d'air, non seulement dans le temps, par un réglage du débit aspiré comme on vient de le voir, mais également dans l'espace. En effet, puisque l'on crée volontairement une prise d'air extérieure, on est entièrement maître du choix de sa localisation sur l'installation de captage. On peut ainsi provoquer la combustion des gaz à l'endroit que l'on veut, et notamment de façon avantageuse, dans une chambre de combustion équipant à cet effet l'installation de captage.

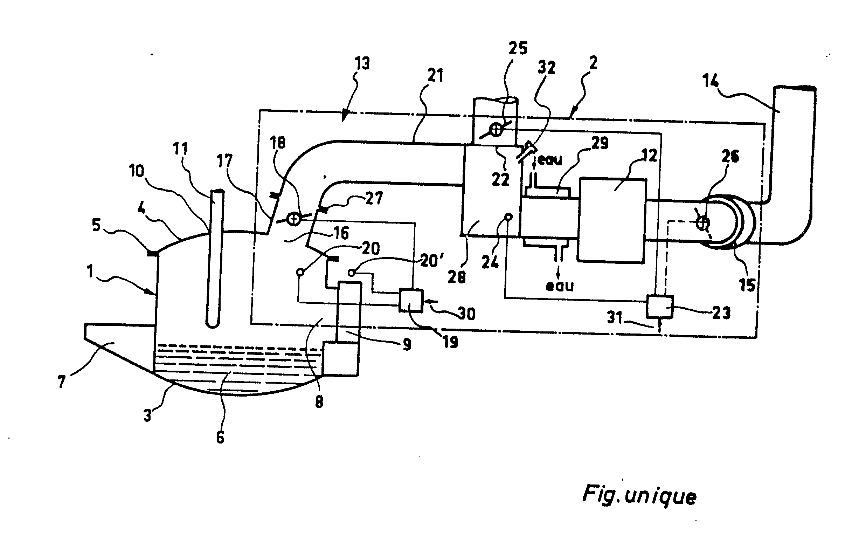

L'invention sera bien comprise et d'autres aspects et avantages apparaîtront plus clairement au vu de la description qui suit, donnée à titre d'exemple et en référence à la figure unique annexée représentant schématiquement un four à arc sidérurgique équipé d'une installation de captage des gaz de réaction conforme à l'invention.

On a illustré en 1 un four à arc sidérurgique et en 2 (encadré) l'ensemble du système de captage et de traitement des gaz de réaction produits dans le four. Ce dernier comprend, de la manière classique, une cuve ou laboratoire 3 couvert par une voûte amovible 4 qui repose sur le bord 5 de la cuve. La cuve, contenant un bain de métal liquide 6, est équipée latéralement de son bec de coulée 7 et, à l'opposé d'une porte coulissante 9 qui obture un orifice de décrassage 8. La voûte présente des ouvertures 10 pour le passage des électrodes en graphite 11, généralement au nombre de trois, mais dont une seule a été représentée pour ne pas surcharger inutilement la figure.

L'ensemble 2 comprend une unité de dépoussiérage à manches filtrantes symbolisée en 12, qui reçoit les gaz à traiter d'une installation de captage 13 placée en amont vers le four et après épuration les évacue à l'atmosphère par l'intermédiaire d'une cheminée 14. Le transport des gaz est assuré par un moyen de tirage constitué ici par un ventilateur 15 placé à la sortie du dépoussiéreur 12.

L'installation de captage 13 est composée de deux parties fonctionnellement indépendantes dans le prolongement immédiat l'une de l'autre :

- un étage d'émission des gaz hors du four 1 suivi d'un étage d'évacuation récupérant et transportant les gaz émis vers le dépoussiéreur 12 sous l'effet de tirage du ventilateur 15.

L'étage d'émission comprend un orifice de captage 16 ménagé dans la voûte 4 du four, une courte conduite 17 solidaire du four dans le prolongement de l'orifice et équipée intérieurement d'un organe de réglage de perte de charge, représenté ici par une vanne papillon 18, et un régulateur 19 qui commande la position du papillon 18 à partir de la mesure de la pression relative dans l'atmosphère du four au moyen des capteurs de pression 20 et 20', placés respectivement à l'intérieur du four sous la voûte et à l'extérieur.

L'étage d'évacuation des gaz issus de l'étage d'émission comprend les éléments essentiels suivants : une conduite 21 canalisant les gaz vers le dépoussiéreur 12, le ventilateur 15 déjà signalé, une ouverture 22 mettant l'étage en communication avec l'air ambiant extérieur, et un régulateur 23 associé à une sonde 24 de mesure d'un paramètre indiquant à tout instant l'état du mélange air-gaz au point de mesure, tel que la concentration en oxygène gazeux et/ou la température.

Ce régulateur sert à contrôler les entrées d'air par l'ouverture 22 et, à cet effet, agit sur la section de passage de ladite ouverture en commandant la position d'une seconde vanne papillon 25 prévue à cette fin.

Selon une variante, le régulateur peut, dans le même but, agir non plus au niveau de l'ouverture 22, mais sur le tirage du ventilateur 15, par exemple au moyen d'un papillon 26 placé en amont de ce dernier. De préférence, ces deux moyens (25, 26) sont mis en oeuvre conjointement en raison de leurs temps de réponse différents : la régulation par la vanne 25 proche de la sonde 24 étant bien entendu plus rapide que celle obtenue par la vanne 26.

Dans l'exemple considéré, la conduite d'évacuation 21 est, à son extrémité amont, reliée de façon étanche à la conduite d'émission 17 à l'aide d'un joint symbolisé en 27. Avantageusement, ce joint n'est que temporaire, afin de permettre les mouvements nécessaires du four (basculement au moment de la coulée, etc...). Il doit donc pouvoir s'effacer, par exemple par pivotement de l'ensemble 2 autour d'un axe vertical, ou par une conception de type télescopique de la conduite 21.

On voit également que la conduite 21 débouche à son autre extrémité dans la partie supérieure d'une enceinte 28, pourvue de la prise d'air 22 et qui constitue une chambre de combustion. On a représenté en 32 un brûleur pilote qui permet d'accrocher en permanence la flamme de combustion des gaz. La chambre 28 est reliée au dépoussiéreur 12 par une conduite 29 conçue en "water jacket" pour une circulation intérieure de fluide refroidissant qui peut avantageusement être de l'eau. La sonde 24 est placée dans cette chambre de préférence en voisinage de son extrémité de sortie et, de toute façon, à un endroit tel que le mélange air-gaz a fini de réagir chimiquement.

Le système ainsi conçu fonctionne de la manière suivante. Avant la mise en marche du four, l'opérateur affiche au régulateur 19 une valeur de consigne symbolisée par la petite flèche 30 et représentative de la surpression qu'il souhaite maintenir dans le four. Il affiche également au régulateur 23 une valeur de consigne -petite flèche 31- indiquant une valeur désirée pour le paramètre mesuré par la sonde 24 et représentatif de l'état physico-chimique du mélange air-gaz à l'endroit de la sonde. On considère pour la suite que ce paramètre est la teneur résiduelle en oxygène du mélange air-gaz après combustion.

Dans ces conditions, lorsque le four fonctionne et produit par conséquent du gaz très chaud qui s'échappe par l'ouverture 16, sous une température d'environ 1 100°C, le régulateur ajuste à tout instant le débit gazeux sortant du four en intervenant rapidement sur la position du papillon 18, de manière à maintenir l'intérieur du four à la pression relative imposée par la valeur de consigne 30. Ensuite, sous l'effet de tirage de l'aspirateur, le débit de gaz émis par la conduite 17 est canalisé par la conduite d'évacuation 21 jusque dans la chambre 28 où il se mélange avec l'air aspiré par l'ouverture 22. Au contact de l'air, le gaz, encore chaud (1 000°C environ) et chargé en CO et $H_2$ (par exemple respectivement 25 % et 15 % en volume), brûle en traversant la chambre 28 en direction de la conduite refroidissante 29. La chambre 28 est bien entendu dimensionnée en fonction de la capacité du four 1, de manière à pouvoir assurer au besoin la combustion complète du gaz pour un débit d'émission maximum.

La sonde 24 placée au voisinage de la sortie de la chambre détecte et transmet au régulateur 23 la valeur de la teneur du mélange gazeux en oxygène résiduel. Le régulateur compare cette valeur à la valeur de consigne 31 et règle la proportion d'air aspiré par l'ouverture 22 en ajustant la position du papillon 25, de manière à annuler, le cas échéant, l'écart calculé par comparaison entre la valeur mesurée et la valeur affichée.

Le mélange gazeux est ensuite acheminé vers le dépoussiéreur 12 à travers la conduite refroidissante 29 qui ramène sa température à un niveau acceptable pour les manches filtrantes, c'est-à-dire au voisinage de 130-150°C.

Si, au cours de sa marche nécessairement irrégulière, le four produit plus de gaz, le régulateur 19 corrige la position du papillon 18 dans le sens de son ouverture afin de maintenir la surpression du four à la valeur imposée. Un débit de gaz plus important pénètre alors dans la chambre de combustion 28 et la sonde 24 enregistre une diminution de la teneur en oxygène dans le mélange gazeux à la sortie de la chambre. Le régulateur réagit en ouvrant un peu plus la vanne 25 afin d'autoriser une plus grande entrée d'air. Dans ces conditions, les pertes de charge chutent dans la conduite d'évacuation 21 et le régulateur 19 recorrige automatiquement le débit d'émission en modifiant la position du volet 18 dans le sens de la fermeture.

Bien entendu, le processus est inversé, mais le principe de fonctionnement demeure le même si la production du four vient à diminuer pour une raison quelconque.

Grâce à l'invention, il est facile, en ajustant la valeur de consigne, de choisir librement les conditions de combustion du gaz capté et de se placer par exemple dans des conditions de non-combustion (papillon 25 en position complètement fermée), de combustion incomplète (air en défaut) ou totale (stoechiométrie), ou de combustion avec un excès d'air juste nécessaire pour permettre en plus de la combustion totale le refroidissement du gaz brûlé par dilution à l'air.

L'une des mises en oeuvre avantageuses de l'invention consiste à choisir une valeur de consigne 31 correspondant à des conditions de combustion stoechiométrique, de manière à assurer une combustion complète des éléments combustibles du gaz, mais sans excès d'air —ou avec un léger excès (par exemple 10 %) pour des raisons de sécurité— afin de minimiser la quantité de fumées à traiter ensuite au dépoussiérage. Dans ce cas, les gaz entrent dans la chambre de combustion 28 avec une température de l'ordre de 1 000°C et en ressortent bien plus chauds après combustion (près de 1 600°C). Avant d'entrer dans le dépoussiéreur 12, ils sont alors refroidis jusqu'à 130°C environ par échange de chaleur avec de l'eau au niveau du refroidisseur 29 dimensionné en conséquence.

Toutes choses étant égales par ailleurs, si l'on compare les débits de gaz à traiter au dépoussiérage avec ceux obtenus par une technique de captage classique avec apport massif d'air de dilution et qui, comme indiqué au début, se montent à plus de 600 000 m³/h, on constate une réduction de près de 2/3 en volume, ce qui fait comprendre tout l'intérêt de l'invention.

Un autre aspect avantageux de l'invention est, comme on le comprend, la récupération sous forme de chaleur, et au niveau même de l'installation de captage, de l'énergie thermique sensible et latente des gaz.

Il doit être noté qu'en ce qui concerne la surpression à maintenir dans le four, le point de fonctionnement optimal semble consister a priori, à mettre le four en équilibre de pression avec l'atmosphère extérieure, c'est-à-dire à fixer une valeur de consigne 30 égale à zéro, de manière à éviter à la fois des entrées d'air dans le four ou des sorties de gaz dans la halle d'aciérie. En réalité, même dans ce cas, les deux phénomènes précités sont à craindre, d'abord en raison des hétérogénéités de pression dans l'enceinte du four, ensuite parce que ce dernier présente, ou peut présenter, de brusques variations d'allure de marche au cours du cycle opératoire en ce qui concerne la quantité de gaz produite, variations auxquelles le système de régulation n'est généralement pas en mesure de répondre immédiatement, ou du moins dans un délai suffisamment court, pour éviter des fluctuations sensibles de la pression intérieure de part et d'autre de la pression atmosphérique.

Conformément à l'invention, on minimise les entrées d'air au moyen d'une faible surpression afin de ne pas trop favoriser les pertes de gaz, mais suffisante tout de même pour constituer une "marge de sécurité" permettant de compenser le plus possible les chutes de pression dans le four.

A titre purement indicatif, une valeur correcte de la surpression se situe autour de 20 à 30 Pa (2 à 3 mm de colonne d'eau).

Toutefois, cette valeur, qui est le fruit de l'expérience acquise par le demandeur sur les installations qu'il a eu à connaître, peut varier d'un four à l'autre et l'utilisateur sera à même de la déterminer dans chaque cas d'espèce en fonction de ses propres souhaits ou nécessités.

On comprend par ailleurs l'intérêt que présente toute mesure prise pour améliorer l'étanchéité du four et en particulier du coeur de voûte à l'endroit de passage des électrodes. Une telle mesure permet en effet, à taux de perte en gaz constant, d'accroître la surpression donc de compenser plus largement, voire totalement selon l'efficacité du système d'étanchéité, les chutes de pression dans le four. Inversement, à surpression égale, une étanchéité améliorée permet bien entendu de réduire les fuites de gaz et, par conséquent la pollution.

Bien entendu, l'invention ne saurait se limiter à l'exemple décrit, mais peut présenter de multiples variantes ou équivalents, tant dans la conception de l'installation de captage que dans celle de régulation mis en oeuvre, dans la mesure bien entendu où sont respectées les caractéristiques de l'invention telles que formulées dans les revendications jointes.

Ainsi, l'ouverture 22 de mise en communication avec l'air extérieur peut fort bien se situer au niveau de l'extrémité amont de la conduite d'évacuation 21, auquel cas le joint d'étanchéité 27 est avantageusement remplacé par un collecteur ouvert, tel qu'une hotte de captage solidaire de la conduite 21 et coiffant à distance la conduite d'émission ; il s'agit là d'une technique bien connue de captage avec présence d'un "gap" au-dessus du four. Dans ce cas, le débit d'air aspiré, conjointement avec les gaz émis, au niveau du gap, peut être régulé selon l'invention, non plus avec une vanne papillon telle que 25, mais par tout autre moyen de réglage de perte de charge appropriée à une ouverture de forme annulaire.

En particulier, un moyen de réglage consiste à régler la position en hauteur de la hotte, par exemple par un montage coulissant de celle-ci sur la conduite 21.

Un autre moyen, déjà explicité, consiste non plus à moduler la section de passage au niveau de l'ouverture, en l'occurence ici le gap, mais à intervenir sur l'effet de tirage du ventilateur 15, par exemple en faisant agir le régulateur 23 sur la vanne papillon 26 placée juste en amont du ventilateur.

D'une manière générale, l'ouverture de prise d'air 22 peut être localisée en un endroit quelconque de l'étage d'évacuation. La seule condition à respecter pour éviter tout risque d'explosion, est d'éviter de placer cette ouverture à un endroit où les gaz de réaction seraient trop froids. On sait en effet qu'à froid, un mélange d'air avec du CO et/ou de l'$H_2$ est de nature explosive.

De même, le refroidisseur des gaz brûlés avant leur entrée dans le dépoussiéreur n'est pas obligatoirement placé sur la conduite reliant la chambre de combustion au dépoussiéreur, mais peut fort bien par exemple constituer un prolongement inférieur de la chambre (zone de post-combustion). D'ailleurs, ces deux types de refroidissement des fumées peuvent fort bien coexister dans la même installation.

Enfin, il doit être noté que l'état voulu du mélange air-gaz n'a pas à être forcement obtenu au point de mesure de la sonde 24. Des connaissances générales en mécanismes de combustion et en écoulements gazeux permettent, au besoin, de déterminer la consigne 31 à appliquer au régulateur 23, de manière à rester parfaitement maître de la localisation de l'endroit où l'état voulu du mélange gazeux est effectivement obtenu. Cet endroit peut être choisi librement en amont ou en aval du point de mesure, mais doit, de toute façon, être situé entre l'ouverture 22 de prise d'air et le dépoussiéreur 12.

REVENDICATIONS

1°) Procédé de captage des gaz de réaction produits dans un four à arc équipé d'un dispositif de captage au niveau du four, comprenant, dans le prolongement immédiat l'un de l'autre : un étage d'émission des gaz hors du four muni d'un organe de réglage de perte de charge et un étage d'évacuation des gaz émis, muni d'une ouverture de communication avec l'air extérieur et assurant , par des moyens de tirage, la collecte des gaz émis et leur transport vers une unité d'épuration, procédé selon lequel on mesure la pression relative de l'atmosphère du four et on règle le débit des gaz dans l'étage d'émission de manière à maintenir en permanence ladite atmosphère en surpression, et caractérisé en ce qu'on règle le débit des gaz évacués en effectuant simultanément deux opérations indépendamment l'une de l'autre :

- dans une première opération, on agit sur l'organe de perte de charge des gaz dans l'étage d'émission afin de maintenir en permanence l'atmosphère du four en surpression,

- dans une seconde opération, on mesure en au moins un point situé en aval de l'ouverture de prise d'air prévue dans l'étage d'évacuation, un paramètre physico-chimique représentatif de l'état du mélange air-gaz formé au point de mesure, on compare la valeur obtenue à une valeur prédéterminée dudit paramètre et représentative d'un état voulu du mélange air-gaz, et on règle le débit d'air aspiré par l'ouverture de façon à annuler l'écart entre les valeurs prédéterminées et mesurées.

2°) Procédé de captage selon la revendication 1, caractérisé en ce que l'on règle le débit d'air aspiré par l'ouverture prévue à cet effet dans l'étage d'évacuation en agissant sur la section de passage de ladite ouverture.

3°) Procédé selon les revendications 1 ou 2, caractérisé en ce que l'on règle le débit d'air aspiré par l'ouverture prévue à cet effet dans l'étage d'évacuation en agissant sur les moyens d'aspiration dudit étage.

4°) Procédé selon la revendication 1, caractérisé en ce que le paramètre physico-chimique mesuré est la teneur résiduelle du mélange air-gaz en oxygène gazeux.

5°) Procédé selon la revendication 1, caractérisé en ce que le paramètre physico-chimique mesuré est la température du mélange air-gaz.

6°) Procédé selon les revendications 1, 4 ou 5, caractérisé en ce que la valeur prédéterminée du paramètre représentatif de l'état du mélange air-gaz est choisie égale ou légèrement supérieure à celle correspondant à une combustion des gaz avec l'air dans des conditions stoechiométriques, et en ce que, avant épuration, on refroidit le mélange air-gaz jusqu'à un

12

0026118

niveau de température compatible avec le traitement d'épuration.

7°) Installation de captage des gaz de réaction produits dans un four à arc comprenant, dans le prolongement immédiat l'un de l'autre un étage d'émission des gaz hors du four muni d'un organe de réglage de perte de charge et un étage d'évacuation des gaz émis équipé de moyens d'aspiration et présentant une ouverture de prise d'air extérieure, installation caractérisée en ce qu'elle comprend deux régulateurs de captage des gaz indépendants l'un de l'autre :

- un régulateur affecté à l'étage d'émission et pourvu de moyens de mesure de la pression relative de l'atmosphère du four, de moyens pour fournir une valeur de consigne représentative de la pression relative voulue de l'atmosphère du four, et des moyens pour agir sur l'organe de réglage de perte de charge placé dans l'étage d'émission,

- un régulateur affecté à l'étage d'évacuation et pourvu de moyens de esure d'un paramètre physico-chimique représentatif de l'état du mélange air-gaz dans l'étage d'évacuation, lesdits moyens étant placé en aval de l'ouverture de prise d'air dans le sens de l'aspiration, des moyens pour fournir une valeur de consigne dudit paramètre représentative d'un état recherché pour le mélange air-gaz, et des moyens pour modifier le débit d'air aspiré par ladite ouverture.

8°) Installation selon la revendication 1, caractérisée en ce que les moyens pour modifier le débit d'air aspiré par l'ouverture prévue à cet effet sont constitués par un organe de réglage de la section de passage de ladite ouverture.

9°) Installation selon la revendication 1 ou 2, caractérisée en ce que les moyens pour modifier le débit d'air aspiré par l'ouverture prévue à cet effet sont constitués par un organe de réglage du tirage des moyens d'aspiration.

10°) Installation selon la revendication 7, caractérisée en ce que les moyens de mesure du régulateur affecté à l'étage d'évacuation sont constitués par une sonde de mesure de la teneur en oxygène dans les gaz.

11°) Installation selon les revendications 7 ou 10, caractérisée en ce que les moyens de mesure du régulateur affecté à l'étage d'évacuation sont constitués par une sonde de repérage de la température dans les gaz.

12°) Installation selon la revendication 7, caractérisée en ce que l'étage d'évacuation comprend une chambre de combustion pour les gaz, et en ce que l'ouverture de prise d'air extérieure débouche dans ladite chambre.

13°) Installation selon la revendication 12, caractérisée en ce que la chambre de combustion est prolongée dans le sens de l'aspiration par un échangeur de chaleur pour refroidir les gaz.

Fig. unique

**0026118**

Numéro de la demande

Office européen
des brevets

**RAPPORT DE RECHERCHE EUROPEENNE**

EP 80 40 1176

| Catégorie | Citation du document avec indication, en cas de besoin, des parties pertinentes | Revendication concernée |
|---|---|---|
| X | GB - A - 920 982 (W.C. HOLMES)<br>  * Figures; revendications 1-20; page 2, lignes 33-65; 66-130; page 3, lignes 1-14, 66-79 * | 1,2,5-8 11-13 |
|  | DE - A - 2 260 665 (CEAG DOMINIT)<br>  * Figures; revendications 1-4; page 5, ligne 1 * | 1,2,4, 5,7,8, 10,11 |
|  | DE - B - 1 508 545 (CEAG CONCORDIA ELEKTRICITÄTS-AG)<br>  * Figures; colonne 2, lignes 43-68; colonne 3, lignes 1-11 * | 1,2,7, 8 |
|  | DE - A - 2 005 220 (WEISSHEIMER)<br>  * Revendications 1-6; figures 1-3 * | 2,3,8, 9 |
|  | FR - A - 1 442 772 (SIEMENS & HALSKE)<br>  * Résumé; figures * | 4,5, 10,11 |
| AD | FR - A - 1 433 994 (RHEINSTAHL ECO)<br>  * Page 1, colonne de gauche, alinéa 2; résumé; figures 1-6 * | 1,7 |
| AD | GB - A - 1 152 886 (AKTIEBOLOGET SVENSKA FLAKTFABRIKEN) | 1,7 |

./.

## DOCUMENTS CONSIDERES COMME PERTINENTS

### CLASSEMENT DE LA DEMANDE (Int. Cl. 3)

C 21 C 5/52
F 27 D 17/00

### DOMAINES TECHNIQUES RECHERCHES (Int. Cl. 3)

C 21 C 5/52
F 27 D 17/00
C 21 C 5/38

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-12-1980 | ELSEN |

OEB Form 1503.1  06.78

**RAPPORT DE RECHERCHE EUROPEENNE**

Office européen
des brevets

EP 80 40 1176

-2-

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | * Figures; page 1, colonne de droite, lignes 64-69 * | | |
| | -- | | |
| A | FR - A - 1 486 595 (ELEKTROKEMISK) | 1,7 | |
| | * Résumé * | | |
| | ---- | | |

**DOMAINES TECHNIQUES RECHERCHES (Int. Cl. 3)**

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| | | |

OEB Form 1503.1   06.78